# EUROPÄISCHE PATENTSCHRIFT

(11) **EP 2 406 874 B1**
(45) Veröffentlichungstag und Bekanntmachung des Hinweises auf die Patenterteilung: **28.03.2018**
(21) Anmeldenummer: 10704792.0
(22) Anmeldetag: 09.02.2010
(51) Int. Cl.: H02M 3/335

(54) **DURCHFLUSSWANDLER MIT STROMREGELUNG**
FORWARD CONVERTER WITH CURRENT REGULATION
CONVERTISSEUR FORWARD AVEC REGULATION DE COURANT

(30) Priorität: 10.03.2009 AT 3812009
(43) Veröffentlichungstag der Anmeldung: 18.01.2012
(73) Patentinhaber: Siemens Aktiengesellschaft, 80333 München (DE)
(72) Erfinder: WEINMEIER, Harald, A-1210 Wien (AT)
(74) Vertreter: Maier, Daniel Oliver
(86) Internationale Anmeldenummer: PCT/EP2010/051535
(87) Internationale Veröffentlichungsnummer: WO 2010/102870

(56) Entgegenhaltungen:
- EP-A1- 0 404 996
- US-A1- 2003 080 723
- US-B1- 6 295 214

## Beschreibung

Die Erfindung betrifft einen Durchflusswandler, einen Transformator, einen primärseitigen Leistungsschalter und eine sekundärseitige Glättungsdrossel umfassend, wobei in Reihe mit dem Leistungsschalter ein Strommesselement angeordneten ist. Des Weiteren betrifft die Erfindung ein Steuerungsverfahren des Durchflusswandlers.

Es sind verschiedene Reglungsschaltungen und Regelungsmethoden für Durchflusswandler bekannt. Eine genaue, aber aufwendige Stromregelung sieht vor, dass eine sekundärseitige Strommessung erfolgt. Dabei wird beispielsweise der Strom durch die Glättungsdrossel gemessen und mit einem Referenzwert verglichen. Eine Reglerabweichung wird dann zum Beispiel mittels eines Optokopplers an eine primärseitige Ansteuerungsschaltung übertragen.

Eine Möglichkeit zur primärseitigen Begrenzung stellt die Regelart "current mode" dar. Üblicherweise wird dabei die Regelabweichung des Spannungsreglers als Sollwert für eine unterlagerte Schalterstromregelung verwendet. Wenn der Strom durch den Leistungsschalter den Sollwert übersteigt, wird der Leistungsschalter abgeschaltet. Durch eine Begrenzung des Sollwerts, im einfachsten Fall mittels einer Zenerdiode, wird der maximale Schalterstrom begrenzt. Der Schalterstrom mal dem Übertragungsverhältnis des Transformators ist im Wesentlichen proportional zum Ausgangsstrom. Somit ist auch der Strom am Ausgang des Durchflusswandlers begrenzt.

Die Genauigkeit einer solchen Regelung wird durch verschiedene Einflüsse beeinträchtigt. Beispielsweise wird der Schalterstrom durch den Rippelstrom an der sekundärseitigen Glättungsdrossel sowie vom Magnetisierungsstrom des Transformators überlagert. Die idealen, rechteckigen Stromverläufe gehen dadurch in trapezförmige Verläufe über.

Gegebenfalls ist das Messsignal des Schalterstromes mit einer sogenannten "slope compensation" zu überlagern, um stabile Regelungsverhältnisse zu erhalten. Dadurch wird jedoch die Trapezform der Stromverläufe verstärkt.

Wenn der Istwert des Schalterstromes den vorgegebenen Sollwert übersteigt, wird der Schalter mit einem Abschaltsignal beaufschlagt. Die Schalthandlung benötigt eine gewisse Zeit (typischerweise einige hundert Nanosekunden), während der der Schalterstrom weiter ansteigt. Auch dieser Effekt führt zu Regelungsungenauigkeiten.

Eine Weitere Möglichkeit der Regelung besteht darin, einen Durchflusswandler im sogenannten "voltage mode" zu betreiben. In diesem Fall wird der Istwert des Schalterstromes nur für die Strombegrenzung herangezogen. Im Vergleich zum "current mode" Betrieb entfällt die Notwendigkeit einer slope compensation, die sonstigen Einflüsse zur Verminderung der Regelungsgenauigkeit bleiben aber bestehen.

Als Stand der Technik sind auch Ep0404996, Us2003/080723 und US6295214 bekannt.

Der Erfindung liegt die Aufgabe zugrunde, für einen Durchflusswandler der eingangs genannten Art eine Verbesserung gegenüber dem Stand der Technik anzugeben. Erfindungsgemäß wird diese Aufgabe gelöst durch eine Anordnung gemäß Anspruch 1 und ein Steuerungsverfahren gemäß Anspruch 8. Dabei ist eine am Strommesselement abfallende Messspannung an einen ersten Kondensator schaltbar, sodass die Kondensatorspannung am ersten Kondensator einem Strom durch die Glättungsdrossel nachgebildet ist. Der erste Kondensator speichert zum Zeitpunkt des Abschaltens des Leistungsschalters den Stromistwert des zuletzt geflossenen Stromes als Kondensatorspannung. Weist die sekundärseitige Glättungsdrossel eine hohe Induktivität auf, ist die Abnahme des Stromes durch die Glättungsdrossel während einer Sperrphase vernachlässigbar, sodass eine ausreichende Proportionalität mit der Kondensatorspannung gegeben ist.

Das erfindungsgemäße Steuerungsverfahren sieht vor, dass während einer Leitphase die Messspannung an den ersten Kondensator geschaltet wird und dass zu Beginn einer Sperrphase der erste Kondensator von der Messspannung getrennt wird, sodass die am ersten Kondensator anliegende Kondensatorspannung den Strom durch die sekundärseitige Drossel nachbildet.

Die erfindungsgemäße Lösung ist gegenüber einer sekundärseitigen Strommessung wesentlich kostengünstiger, weil ein sekundärseitiger Strommesswiderstand, verbunden mit einem zugehörigen low-offset Operationsverstärker, entfällt.

Gegenüber einem Betrieb nach dem bekannten "current mode" Prinzip oder "voltage mode" Prinzip ist der Vorteil einer wesentlich höheren Genauigkeit und Proportionalität gegenüber dem Ausgangsstrom gegeben. Der Einfluss des übertragenen Rippelstromes durch die Glättungsdrossel wird aufgehoben, weil der Stromregler Eigenschaften eines I-Reglers aufweist und dadurch eine Mittelwertbildung des Stromes bewirkt.

Zudem ist der Einfluss einer slope compensation ebenso wenig relevant wie der Einfluss von Schaltverzögerungen.

Bei einer Glättungsdrossel mit niedriger Induktivität ist es vorteilhaft, wenn an den ersten Kondensator eine Entladeschaltung gekoppelt ist. Während einer Sperrphase wird der erste Kondensator über die Entladeschaltung entladen. Dies geschieht infolge einer geeigneten Dimensionierung der Entladeschaltung proportional zur Reduktion des Stromes durch die sekundärseitige Glättungsdrossel.

In einer vorteilhaften Ausprägung der Erfindung weist der Transformator einen geschlossenen Kern auf. Durch das Fehlen eines Luftspalts wird der Einfluss eines Magnetisierungsstromes vernachlässigbar klein.

Eine einfache Ausprägung sieht vor, dass das Strommesselement als Shuntwidestand ausgebildet ist.

Zudem ist es von Vorteil, wenn der erste Kondensator über eine mit dem Leistungsschalter synchronisierte Schalteinrichtung parallel zu dem Strommesselement schaltbar ist. Der Leistungsschalter und die Schalteinrichtung werden dadurch nahezu zeitgleich geschaltet, sodass eine hohe Genauigkeit der Proportionalität zwischen dem Strom durch die Glättungsdrossel und der Kondensatorspannung vorliegt.

Dabei ist es günstig, wenn die Schalteinrichtung aus einer Reihenschaltung zweier Kleinsignaltransistoren gebildet ist und wenn die Schalteinrichtung mit einem verzögerten Steuersignal des Leistungsschalters angesteuert ist. Die Transistoren sind dabei so angeordnet, dass die Anoden der parasitären Dioden oder die Kathoden der parasitären Dioden miteinander verbunden sind. Somit kann kein Strom fließen, wenn beide Transistoren abgeschaltet sind. Der erste Kondensator ist bei abgeschalteten Transistoren also nur an die Entladeschaltung gekoppelt.

Leistungsschalter weisen in der Regel höhere Schaltverzögerung als Schalteinrichtungen für geringe Messsignale auf. Es ist daher günstig, der Schalteinrichtung das Steuersignal des Leistungsschalters über eine Verzögerungsschaltung zuzuführen. Auf diese Weise werden die Schalter trotz unterschiedlicher Schaltverzögerungen auf einfache Weise synchronisiert.

Von Vorteil ist es des Weiteren, wenn die Kondensatorspannung am ersten Kondensator einem Stromregler zugeführt ist. Das Steuerungsverfahren ist dann günstigerweise so ausgebildet, dass zur Stromregelung des Durchflusswandlers die Kondensatorspannung am ersten Kondensator mittels des Stromreglers mit einer Referenzspannung verglichen wird.

Bei einem vorteilhaften Steuerungsverfahren eines Durchflusswandlers mit niedriger sekundärseitiger Glättungsinduktivität wird während einer Sperrphase die im ersten Kondensator gespeicherte Energie über eine Entladeschaltung in der Weise abgegeben, dass der Verlauf der am ersten Kondensator anliegenden Kondensatorspannung den Verlauf des Stromes durch die sekundärseitige Drossel nachbildet.

Ein verbessertes Steuerungsverfahren sieht vor, dass der erste Kondensator von der Messspannung getrennt wird, bevor der Leistungsschalter abgeschaltet wird. Damit ist sichergestellt, dass sich der erste Kondensator nach einem Abschaltvorgang des Leistungsschalters nicht über den Shuntwiderstand zu entladen beginnt.

Die Erfindung wird nachfolgend in beispielhafter Weise unter Bezugnahme auf die beigefügten Figuren erläutert. Es zeigen in schematischer Darstellung:
- Fig. 1: Schaltungsaufbau
- Fig. 2: Signalverläufe

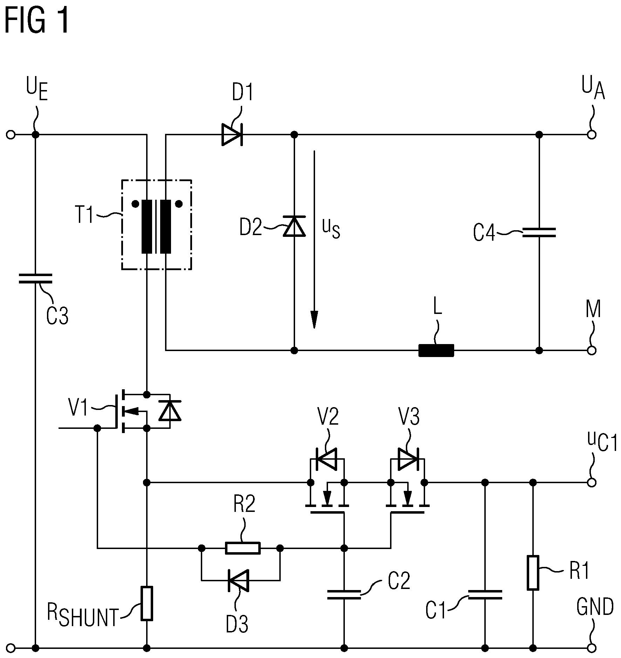

Der beispielhafte Schaltungsaufbau in Fig. 1 umfasst einen Transformator T mit einer primärseitigen und einer sekundärseitigen Wicklung. Die Wicklungen weisen gleiche Wicklungsrichtungen auf. Die primärseitige Wicklung ist über einen Leistungsschalter V1, welcher als Leistungstransistor ausgebildet ist, an eine Eingangsspannung U_{E} geschaltet. An der Eingangsspannung U_{E} ist ein Eingangskondensator C3 zur Pufferung bzw. Spannungsglättung angeschlossen. In Reihe mit dem Leistungsschalter V1 ist ein als Shuntwiderstand ausgebildetes Strommesselement R_{SHUNT} angeordnet.

Die sekundärseitige Wicklung ist mit einem ersten Ende über eine erste Diode D1 an einen Anschluss einer Ausgangsspannung U_{A} geführt. Das zweite Ende der sekundärseitigen Wicklung ist über eine Glättungsdrossel L an ein sekundärseitiges Massepotenzial M geführt. Dabei ist als Freilaufpfad eine zweite Diode D2 vom zweiten Ende der sekundärseitigen Wicklung zum Anschluss der Ausgangsspannung U_{A} geführt.

Parallel zu dem Strommesselement R_{SHUNT} ist die Schaltung zur Nachbildung des sekundärseitigen Stromes i_{L} durch die Glättungsdrossel L angeschlossen. Das Strommesselement R_{SHUNT} ist dabei zwischen dem Leistungsschalter V1 und einem primärseitigen Bezugspotenzial GND angeordnet. Die Verbindung des Leistungsschalters V1 mit dem Strommesselement R_{SHUNT} ist über eine Schalteinrichtung mit einem ersten Anschluss des ersten Kondensators C1 verbunden. Der zweite Anschluss des ersten Kondensators C1 ist an das primärseitige Bezugspotenzial GND angeschlossen. Parallel zum ersten Kondensator C1 ist eine Entladeschaltung angeordnet. Diese Entladeschaltung dient der Nachbildung einer Reduktion des sekundärseitigen Stromes i_{L} bei einer niedrigen sekundärseitigen Glättungsinduktivität L und wird im einfachsten Fall mit einem ersten Widerstand R1 realisiert.

Die Schalteinrichtung umfasst zwei in Reihe angeordnete Kleinsignaltransistoren V2, V3, als N-Kanal Anreicherungs-Feldeffekttransistoren (FET) ausgebildet. Die Anoden der parasitären Dioden dieser Kleinsignaltransistoren V2, V3 sind miteinander verbunden, sodass ein Stromfluss in jede Richtung verhindert wird, wenn beide Kleinsignaltransistoren V2, V3 abgeschaltet sind.

Der Gate-Anschluss des Leistungsschalters V1 ist über eine Verzögerungsschaltung mit den Gate-Anschlüssen der Kleinsignaltransistoren V2, V3 verbunden. Die Verzögerungsschaltung umfasst dabei einen zweiten Widerstand R2, der zwischen den Gate-Anschluss des Leistungsschalters V1 und den Gate-Anschlüssen der Kleinsignaltransistoren V2, V3 angeordnet ist. Von den Gate-Anschlüssen der Kleinsignaltransistoren V2, V3 führt ein Parallelpfad mit einer dritten Diode D3 zum Gate-Anschluss des Leistungsschalters V1. Zudem ist ein zweiter Kondensator C2 zwischen die Gate-Anschlüsse der Kleinsignaltransistoren V2, V3 und das primärseitige Bezugspotenzial GND geschaltet.

Ein dem Leistungsschalters V1 zugeführtes Schaltsignal wird mittels dieser Verzögerungsschaltung um eine kurze Zeitspanne verzögert den Kleinsignaltransistoren V2, V3 zugeführt. Auf diese Weise wird die gegenüber Kleinsignaltransistoren längere Schaltverzögerung des Leistungsschalters V1 berücksichtigt, sodass die drei Schalter V1, V2, V3 im Wesentlichen synchron ein- und ausschalten.

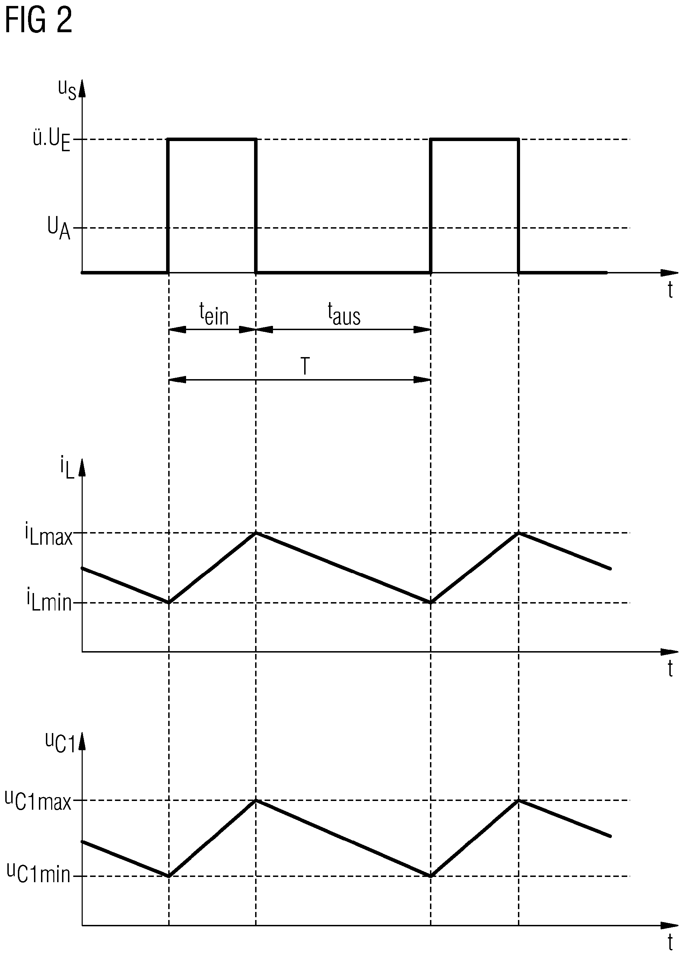

Die Funktionsweise wird mit Bezug auf die Fig. 2 beschrieben. Fig. 2 zeigt die Signalverläufe des Durchflusswandlers. Konkret sind die Verläufe der Spannung u_{S} an der sekundärseitigen Wicklung, des Stromes i_{L} durch die Glättungsdrossel L und der Spannung U_{C1} am ersten Kondensator C1 über der Zeit t dargestellt.

Eine Schaltperiode mit einer Periodendauer T beginnt mit einer Leitphase tₑᵢₙ. Zu Beginn der Leitphase tₑᵢₙ wird der Leistungsschalter V1 eingeschaltet und ein ansteigender Strom fließt durch die primärseitige Wicklung. Der magnetische Fluss im Kern des Transformators T steigt an und induziert in der sekundärseitigen Wicklung eine Spannung u_{S}, die der Eingangsspannung U_{E} mal dem Übertragungsverhältnis ü des Transformators T entspricht.

Gleichzeitig mit dem Leistungsschalter V1 werden die Schalter V2, V3 der Schalteinrichtung eingeschaltet. Damit wird die Messspannung, das heißt, der sich mit dem primärseitigen Strom ergebende Spannungsabfall an dem Strommesselement R_{SHUNT}, auf den ersten Kondensator C1 übertragen.

Eine Leitphase tₑᵢₙ endet und eine Sperrphase tₐᵤₛ beginnt mit dem Abschalten des Leistungsschalters V1. Die Schalter V2, V3 der Schalteinrichtung schalten synchron mit dem Leistungsschalter V1 ab. Dabei ist es vorteilhaft, wenn die Schalter V2, V3 der Schalteinrichtung geringfügig früher als der Leistungsschalter V1 abschalten. Somit wird verhindert, dass sich nach dem Abschalten des Leistungsschalters V1 der erste Kondensator C1 über das Strommesselement R_{SHUNT} entleert. Mit dem Beginn einer Sperrphase tₐᵤₛ liegt am ersten Kondensator C1 eine maximale Kondensatorspannung u_{C1max} an, die proportional zum zuletzt primärseitig geflossenen Strom und zum maximalen Strom i_{Lmax} durch die Glättungsdrossel L ist. Sobald der erste Kondensator C1 von der Messspannung getrennt ist, beginnt eine Entladung über die Entladeschaltung R2. Die Dimensionierung der Entladeschaltung R2 ist dabei so gewählt, dass die Kondensatorspannung u_{C1} proportional zum abnehmenden Strom i_{L} durch die Glättungsdrossel L abnimmt.

Die Kondensatorspannung u_{C1} ist einem Stromregler zugeführt, wobei ein Vergleich mit einer Referenzspannung erfolgt. Der Stromregler weist Anteile eines I-Reglers auf, wodurch ein Rippelstrom durch die Glättungsdrossel L gemittelt wird. Der Rippelstrom beeinflusst die Stromregelung demnach nicht.

Mit dem Beginn einer neuen Leitphase tₑᵢₙ haben der Strom i_{L} durch die Glättungsdrossel L und die Kondensatorspannung u_{C1} jeweils ein Minimum i_{Lmin}, u_{C1min} erreicht und es beginnt ein neuer Schaltzyklus.

## Patentansprüche

1. Durchflusswandler, einen Transformator (T), einen primärseitigen Leistungsschalter (V1) und eine sekundärseitige Glättungsdrossel (L) umfassend, wobei in Reihe mit dem Leistungsschalter (V1) ein Strommesselement (R_{SHUNT}) angeordneten ist, wobei eine am Strommesselement (R_{SHUNT}) abfallende Messspannung an einen ersten Kondensator (C1) schaltbar ist und dass an den ersten Kondensator (C1) eine Entladeschaltung (R1) gekoppelt ist, **dadurch gekennzeichnet, dass** die Dimensionierung der Entladeschaltung so gewählt ist, dass eine Entladung des ersten Kondensators (C1) proportional zur Reduktion eines abnehmenden Stromes (i_{L}) durch die sekundärseitige Glättungsdrossel (L) bewirkt, sodass die Kondensatorspannung (u_{C1}) am ersten Kondensator (C1) dem Strom (i_{L}) durch die Glättungsdrossel (L) nachgebildet ist.

2. Durchflusswandler nach Anspruch 1, **dadurch gekennzeichnet, dass** der Transformator (T) einen geschlossenen Kern aufweist.

3. Durchflusswandler nach Anspruch 1 oder 2, **dadurch gekennzeichnet, dass** das Strommesselement (R_{SHUNT}) als Shuntwiderstand ausgebildet ist.

4. Durchflusswandler nach einem der Ansprüche 1 bis 3, **dadurch gekennzeichnet, dass** der erste Kondensator (C1) über eine mit dem Leistungsschalter (V1) synchronisierte Schalteinrichtung parallel zu dem Strommesselement (R_{SHUNT}) schaltbar ist.

5. Durchflusswandler nach Anspruch 4, **dadurch gekenazeiahnet, dass** die Schalteinrichtung aus einer Reihenschaltung zweier Kleinsignaltransistoren (V2, V3) gebildet ist und dass die Schalteinrichtung mit einem verzögerten Steuersignal des Leistungsschalters (V1) angesteuert ist.

6. Durchflusswandler nach Anspruch 4 oder 5, **dadurch gekennzeichnet, dass** der Schalteinrichtung das Steuersignal des Leistungsschalters (V1) über eine Verzögerungsschaltung (C2, R2, D3) zugeführt ist.

7. Durchflusswandler nach einem der Ansprüche 1 bis 6, **dadurch gekenntzeichnet, dass** die Kondensatorspannung (u_{C1}) am ersten Kondensator (C1) einem Stromregler zugeführt ist.

8. Steuerungsverfahren eines Durchflusswandlers nach einem der Ansprüche 1 bis 7, **dadurch gekennzeichnet, dass** während einer Leitphase (tₑᵢₙ) die Messspannung an den ersten Kondensator (C1) geschaltet wird und dass zu Beginn einer Sperrphase (tₐᵤₛ) der erste Kondensator (C1) von der Messspannung getrennt wird, sodass die am ersten Kondensator (C1) anliegende Kondensatorspannung (u_{C1}) den Strom (i_{L}) durch die sekundärseitige Drossel (L) nachbildet.

9. Steuerungsverfahren nach Anspruch 8, **dadurch gekennzeichnet, dass** während einer Sperrphase (tₐᵤₛ) die im ersten Kondensator (C1) gespeicherte Energie über eine Entladeschaltung (R1) in der Weise abgegeben wird, dass der Verlauf der am ersten Kondensator (C1) anliegenden Kondensatorspannung (u_{C1}) den Verlauf des Stromes (i_{L}) durch die sekundärseitige Drossel (L) nachbildet.

10. Steuerungsverfahren nach Anspruch 8 oder 9, **dadurch gekennzeichnet, dass** der erste Kondensator (C1) von der Messspannung getrennt wird, bevor der Leistungsschalter (V1) abgeschaltet wird.

11. Steuerungsverfahren nach einem der Ansprüche 8 bis 10, **dadurch gekennzeichnet, dass** zur Stromregelung des Durchflusswandlers die Kondensatorspannung (u_{C1}) am ersten Kondensator (C1) mittels eines Stromreglers mit einer Referenzspannung verglichen wird.

## Claims

1. Forward converter, comprising a transformer (T), a primary-side circuit breaker (V1) and a secondary-side smoothing choke (L), wherein a current measuring element (R_{SHUNT}) is arranged in series with the circuit breaker (V1), wherein a measuring voltage dropping at the current measuring element (R_{SHUNT}) can be connected to a first capacitor (C1) and a discharge circuit (R1) is coupled to the first capacitor (C1), **characterised in that** the dimensioning of the discharge circuit is selected such that a discharging of the first capacitor (C1) proportional to the reduction of a decreasing current (i_{L}) through the secondary-side smoothing choke (L) causes the capacitor voltage (u_{C1}) at the first capacitor (C1) to replicate the current (i_{L}) through the smoothing choke (L).

2. Forward converter according to claim 1, **characterised in that** the transformer (T) has a closed core.

3. Forward converter according to claim 1 or 2,
**characterised in that** the current measuring element (R_{SHUNT}) is embodied as a shunt resistor.

4. Forward converter according to one of claims 1 to 3,
**characterised in that** the first capacitor (C1) can be connected in parallel with the current measuring element (R_{SHUNT}) via a switching device synchronised with the circuit breaker (V1).

5. Forward converter according to claim 4, **characterised in that** the switching device is formed by a series connection of two small signal transistors (V2, V3) and the switching device is actuated with a delayed control signal of the circuit breaker (V1).

6. Forward converter according to claim 4 or 5,
**characterised in that** the switching device is supplied with the control signal of the circuit breaker (V1) via a delay circuit (C2, R2, D3).

7. Forward converter according to one of claims 1 to 6,
**characterised in that** the capacitor voltage (u_{C1}) at the first capacitor (C1) is supplied to a current controller.

8. Control method of a forward converter according to one of claims 1 to 7, **characterised in that** during a conducting phase (tₑᵢₙ) the measuring voltage is connected to the first capacitor (C1) and at the start of a blocking phase (tₐᵤₛ) the first capacitor (C1) is separated from the measuring voltage, so that the capacitor voltage present at the first capacitor (C1) replicates the current (i_{L}) through the secondary-side choke (L).

9. Control method according to claim 8, **characterised in that** during a blocking phase (tₐᵤₛ) the energy stored in the first capacitor (C1) is output via a discharge circuit (R1) in such a manner that the characteristic curve of the capacitor voltage (u_{C1}) present at the first capacitor (C1) replicates the characteristic curve of the current (i_{L}) through the secondary-side choke (L).

10. Control method according to claim 8 or 9, **characterised in that** the first capacitor (C1) is separated from the measuring voltage before the circuit breaker (V1) is disconnected.

11. Control method according to one of claims 8 to 10,
**characterised in that,** for current control of the forward converter, the capacitor voltage (u_{C1}) at the first capacitor (C1) is compared with a reference voltage by means of a current controller.

## Revendications

1. Convertisseur à transfert direct comprenant un transformateur (T), un disjoncteur (V1) côté primaire et une inductance de lissage (L) côté secondaire, un élément de mesure de courant (R_{SHUNT}) étant monté en série avec le disjoncteur (V1), une tension de mesure en chute au niveau de l'élément de mesure de courant (R_{SHUNT}) pouvant être commutée sur un premier condensateur (C1) et un circuit de décharge (R1) étant couplé au premier condensateur (C1), **caractérisé en ce que** le dimensionnement du circuit de décharge est choisi de telle sorte qu'une décharge du premier condensateur (C1) est provoquée proportionnellement à la réduction d'un courant décroissant (i_{L}) passant par l'inductance de lissage (L) côté secondaire, de sorte que la tension de condensateur (u_{C1}) au niveau du premier condensateur (C1) reproduit le courant (i_{L}) passant par l'inductance de lissage (L).

2. Convertisseur à transfert direct selon la revendication 1, **caractérisé en ce que** le transformateur (T) comporte un noyau fermé.

3. Convertisseur à transfert direct selon la revendication 1 ou 2, **caractérisé en ce que** l'élément de mesure de courant (R_{SHUNT}) est réalisé en tant que résistance de shunt.

4. Convertisseur à transfert direct selon l'une des revendications 1 à 3, **caractérisé en ce que** le premier condensateur (C1) peut être commuté parallèlement à l'élément de mesure de courant (R_{SHUNT}) via un dispositif de commutation synchronisé avec le disjoncteur (V1).

5. Convertisseur à transfert direct selon la revendication 4, **caractérisé en ce que** le dispositif de commutation est formé par un montage en série de deux transistors pour petits signaux (V2, V3) et **en ce que** le dispositif de commutation est commandé par un signal de commande retardé du disjoncteur (V1).

6. Convertisseur à transfert direct selon la revendication 4 ou 5, **caractérisé en ce que** le signal de commande du disjoncteur (V1) est amené au dispositif de commutation via un circuit retardateur (C2, R2, D3).

7. Convertisseur à transfert direct selon l'une des revendications 1 à 6, **caractérisé en ce que** la tension de condensateur (u_{C1}) au niveau du premier condensateur (C1) est amenée à un régulateur de courant.

8. Procédé de commande d'un convertisseur à transfert direct selon l'une des revendications 1 à 7, **caractérisé en ce que** la tension de mesure est commutée sur le premier condensateur (C1) pendant une phase conductrice (tₑᵢₙ) et **en ce que** le premier condensateur (C1) est coupé de la tension de mesure au début d'une phase de blocage (tₐᵤₛ), de sorte que la tension de condensateur (u_{C1}) appliquée au premier condensateur (C1) reproduit le courant (i_{L}) passant par l'inductance (L) côté secondaire.

9. Procédé de commande selon la revendication 8, **caractérisé en ce que**, pendant une phase de blocage (tₐᵤₛ), l'énergie accumulée dans le premier condensateur (C1) est délivrée via un circuit de décharge (R1) de telle manière que le tracé de la tension de condensateur (u_{C1}) appliquée au premier condensateur (C1) reproduit le tracé du courant (i_{L}) passant par l'inductance (L) côté secondaire.

10. Procédé de commande selon la revendication 8 ou 9, **caractérisé en ce que** le premier condensateur (C1) est coupé de la tension de mesure avant la coupure du disjoncteur (V1).

11. Procédé de commande selon l'une des revendications 8 à 10, **caractérisé en ce que**, pour la régulation du courant du convertisseur à transfert direct, la tension de condensateur (u_{C1}) au niveau du premier condensateur (C1) est comparée avec une tension de référence au moyen d'un régulateur de courant.
